# EUROPÄISCHE PATENTSCHRIFT

(11) **EP 0 615 830 B1**
(45) Veröffentlichungstag und Bekanntmachung des Hinweises auf die Patenterteilung: **29.12.1997**
(21) Anmeldenummer: 94101995.2
(22) Anmeldetag: 09.02.1994
(51) Int. Cl.: B29C 47/92, B29C 44/00

(54) **Treibmitteldosierung bei der Herstellung von Kunststoffschäumen**
Dosage of foaming agents for producing foamed plastics
Dosage d'un agent moussant pour l'obtention de matières plastiques alvéolaires

(30) Priorität: 25.02.1993 DE 4305866
(43) Veröffentlichungstag der Anmeldung: 21.09.1994
(73) Patentinhaber: Linde Aktiengesellschaft, 65189 Wiesbaden (DE)
(72) Erfinder: Klane, Bernd, Dipl.-Ing., D-81234 München (DE)
(74) Vertreter: Kasseckert, Rainer

(56) Entgegenhaltungen:
- EP-A- 0 486 957
- WO-A-80/02006
- DE-A- 2 501 966
- DE-A- 3 316 838
- DE-A- 3 600 041
- DE-A- 3 637 918
- DE-A- 4 019 202
- PATENT ABSTRACTS OF JAPAN vol. 3, no. 23 (C-38)26. Februar 1979 & JP-A-53 146 766 (FURUKAWA DENKI KOGYO K.K.) 20. Dezember 1978

## Beschreibung

Die Erfindung betrifft ein Verfahren zur Herstellung Verfahren zur Herstellung extrudierter Kunststoffschäume, wobei dem im Extruder geförderten Kunststoff ein Treibmittel mit hohem Druck zugeführt und die Menge des Treibmittels mit einem Stellventil geregelt wird, und wobei der Druck hinter dem Stellventil mittels eines Druckhalteventils konstant gehalten wird.

Bekannte Verfahren zur Herstellung aufgeschäumter Kunststoffe verwenden Treibmittel, die unter Normalbedingungen gasförmig vorliegen, und die mit hohem Druck einer plastischen, meist thermisch erweichten Kunststoffmasse zugeführt und mit dieser homogen vermischt werden. Bei der anschließenden Entspannung dieses Gemisches auf Normaldruck tritt eine durch das Treibmittel hervorgerufene Aufschäumung des Kunststoffs ein.

Der geschmolzene Kunststoff wird in dem Extruder mittels Schneckengewinden zu einer Austrittsdüse gefördert. An einer bestimmten Stelle des Extruders wird das flüssige Treibmittel zugegeben, das sich mit dem Kunststoff auf dem Weg zur Austrittsdüse vermischt. Um die Produktionsqualität bei diesem Verfahren unverändert aufrecht zu erhalten, müssen die Massenströme von Treibmittel und Kunststoff jeweils konstant und zueinander proportional bleiben. Andernfalls wird der aus der Düse extrudierte Kunststoff unterschiedlich stark aufgeschäumt. Produktionsfehler und Ausschuß sind die Folge, die den Herstellungsprozeß unrentabel machen würden.

Die Anforderung, der Kunststoffmasse einen genau dosierten Treibmittelstrom zuzuführen, kann bisher technisch nur für Flüssigkeiten mittels Dosierpumpen gelöst werden. Da in zunehmenden Maße auch verdichtete Inertgase als Treibmittel Verwendung finden, müssen für diese neue Dosiereinrichtungen eingesetzt werden. Üblicherweise werden solche Inertgase mittels eines Stellventils in flüssiger oder überkritischer Phase dosiert. Das Stellventil wird dabei mittels eines vorgeschalteten Druckminderers mit einem konstanten Vordruck versorgt. Der Hinterdruck des Stellventils ist durch den Massedruck der Kunststoffschmelze gegeben. Sinkt z.B. dieser Massedruck ab, muß der Treibmittelfluß durch das Stellventil gedrosselt werden. Während des Extruderbetriebs betragen die Druckschwankungen hinter dem Stellventil bis zu etwa 10 bar. Diese Druckschwankungen des Massedrucks müssen ständig vom Stellventil ausgeglichen werden, was einen bestimmten Mindeststellbereich dieser Stellventile erfordert.

Noch problematischer wird die Regelung des Treibmittelflusses, wenn unterschiedlich stark thermisch aufgeweichter Kunststoff im Extruder transportiert wird, etwa wenn ein inhomogenes Recycling-Gemisch von Kunststoffen vorliegt, oder wenn die Fördermengen variiert werden sollen oder der Extruder an- oder abgefahren wird. Bei den hierdurch verursachten starken Schwankungen des Massedrucks sind die Stellverhältnisse üblicher Stellventile zu klein, um immer einen zum Kunststoffmassestrom proportionalen Treibmittelfluß zu liefern.

Aus der EP-A-0 486 957 ist ein Verfahren zur Herstellung aufgeschäumter Kunststoffe bekannt, bei dem die Treibmittelmenge mit einem Massendurchflußregler gemessen wird. Der Druck hinter diesem Regler wird durch den Massedruck des Kunststoffs bestimmt.

Bei den Verfahren gemäß der JP-A-53 146 766 und der DE-OS-25 01 966, die dem Oberbegriff des Anspruchs 1 bilden wird die Druckdifferenz über dem die Treibmittelzufuhr regelnden Ventil konstant gehalten. Eine Regelung der Treibmittelmenge in Abhängigkeit von der geförderten Kunststoffmasse ist nicht vorgesehen.

Aufgabe vorliegender Erfindung ist deshalb, bei einem Verfahren zur Herstellung extrudierter Kunststoffschäume sicherzustellen, daß während des gesamten Extruderbetriebs ein dem Kunststoffmassestrom proportionaler Treibmittelfluß in den Extruder gelangt und damit die Qualität der Kunststoffschäume zeitlich unverändert bleibt.

Diese Aufgabe wird erfindungsgemäß dadurch gelöst, daß die Menge des Treibmittels direkt in Abhängigkeit von der geförderten Kunststoffmasse geregelt wird und daß der Differenzdruck zwischen Eingang und Ausgang des Stellventils auf 10 bis 50 bar, vorzugsweise 10 bis 30 bar, konstant gehalten wird.

Durch das erfindungsgemäße Verfahren ist der Treibmittelfluß zum Extruder nicht mehr vom Massedruck im Extruder abhängig. Dies ist insbesondere dann von Vorteil, wenn ein konstanter Massestrom an Kunststoff im Extruder gefördert wird, der jedoch einen schwankenden Massedruck erzeugt, z.B. aufgrund unregelmäßiger thermischer Plastifzierung. In diesem Falle kann die Menge des Treibmittels über das Stellventil auf einen konstanten Wert geregelt werden. Schwankungen der zugeführten Treibmittelmenge, wie sie bisher aufgrund schwankenden Massedrucks trotz konstantem Massestrom des Kunststoffs möglich waren, sind nunmehr ausgeschlossen.

Weiterhin läßt sich das erfindungsgemäße Verfahren besonders dann mit Vorteil einsetzen, wenn große Massedruckschwankungen im Extruder aufgrund variierender Fördermengen des Kunststoffs bestehen.

Erfindungsgemäß kann dann die Menge des durch das Stellventil fließenden Treibmittels über die Extruderdrehzahl geregelt werden. Bei einer homogenen, thermisch gleichmäßig plastifzierten Kunststoffmasse ist der Massestrom proportional zur Extruderdrehzahl. Somit kann mittels einer geeigneten Steuereinheit die Drehzahl des Extruders gemessen und das Stellventil entsprechend angesteuert werden, so daß der Treibmittelstrom nur noch von der Extruderdrehzahl abhängt.

Das Stellventil wird beim erfindungsgemäßen Verfahren mit einem Differenzdruck zwischen Ein- und Ausgangsseite von 10 bis 50 bar betrieben. Dazu wird das Stellventil zwischen einem Druckminderer, der das hochkomprimierte, überkritische oder verflüssigte Gas über einen Kompressor zugeleitet bekommt, und einem Druckhalteventil angeordnet. Der Druckminderer regelt den eingangsseitigen Kompressordruck ausgangsseitig auf einen Wert von beispielsweise 400 bis 450 bar. Das Druckhalteventil hält eingangsseitig den Druck auf einen Wert von beispielsweise 350 bis 400 bar, so daß das Stellventil mit einer konstanten Druckdifferenz betrieben wird. Der ausgangsseitige Druck des Druckhalteventils liegt in diesem Fall etwa zwischen 50 und 350 bar, abhängig vom Massedruck im Extruder.

Das erfindungsgemäße Verfahren läßt sich insbesondere für das Schäumen von Kunststoffen mittels inerter Treibmittel, wie Stickstoff oder Kohlendioxid, verwendet. Diese Treibmittel liegen bei den hier verwendeten Drücken im Bereich von mehreren hundert bar je nach Temperatur des Treibmittels entweder im flüssigen oder überkritischen Zustand vor.

Zur Produktion sehr leichter Schäume ist es außerdem günstig, zusätzlich ein zweites Treibmittel, wie einen Kohlenwasserstoff oder halogenierten Kohlenwasserstoff, zu verwenden. Dieses weitere Treibmittel wird in flüssiger Form in exakt dosierter Menge dem erfindungsgemäß dosierten Treibmittelstrom in einer Mischkammer zugegeben.

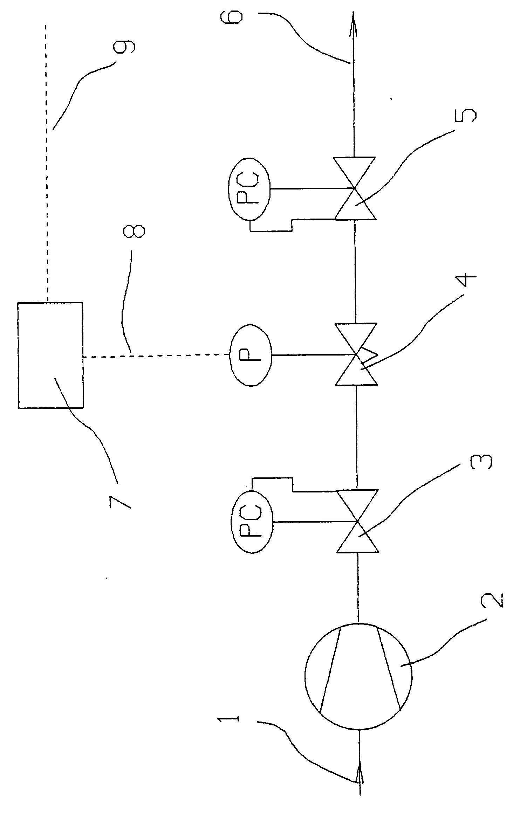

Im folgenden soll anhand der einzigen Zeichnung das erfindungsgemäße Verfahren näher erläutert werden.

In der Zeichnung ist schematisch eine Versorgungsstrecke mit ihren wichtigsten Elementen für ein inertes Treibmittel für einen Extruder mit thermoplastischem Polyethylen dargestellt. Durch Leitung 1 wird beispielsweise verflüssigtes Kohlendioxid oder Stickstoff von einer Gaseversorgungseinheit durch den Kompressor 2 gefördert. Sein Ausgangsdruck beträgt in diesem Ausführungsbeispiel etwa 440 bar. Von einem nachgeschalteten Druckminderer 3 wird der Druck auf einen konstanten Wert von 420 bar reduziert. Es schließt sich das Stellventil 4 an, dem erfindungsgemäß ein Druckhalteventil 5 nachgeschaltet ist, das den Druck hinter dem Stellventil 4 auf 400 bar regelt. Das Stellventil 4 fördert somit über eine konstante Druckdifferenz von 20 bar einen bestimmten Treibmittelfluß. Leitung 6 führt letzteren zum Extruder, wobei in dieser Leitung 6 der Druck entsprechend dem Massedruck im Extruder zwischen 50 und 380 bar liegen kann.

Um erfindungsgemäß die Menge des Treibmittels direkt in Abhängigkeit von der geförderten Kunststoffmasse regeln zu können, wird in diesem Ausführungsbeispiel das Stellventil 4 über Leitung 8 von einer Steuereinheit 7 angesteuert, die wiederum über Leitung 9 die Extruderdrehzahl als Eingangssignal erhält.

Während bisher mit allein dem Stellventil 4 und vorgeschaltetem Druckminderer 3 lediglich ein Stellverhältnis von etwa 1:20 bis 1:25 erreicht werden konnte, ist es nunmehr möglich, mit der erfindungsgemäßen Anordnung in diesem Ausführungsbeispiel ein Stellverhältnis von 1:150 bis 1:200 zu erreichen, womit ein enorm größerer Regelbereich zur Verfügung steht.

Stochastische Schwankungen des Extrudereingangsdruckes sowie Druckabsenkungen im Extruder lassen nunmehr das Stellventil 4 unbeeinflußt. Mit nur einem Stellsignal kann die zugeführte Treibmittelmenge proportional zur Drehzahl des Extruders und damit exakt auf die geförderte Kunststoffmasse angepaßt gehalten werden.

## Patentansprüche

1. Verfahren zur Herstellung extrudierter Kunststoffschäume, wobei dem im Extruder geförderten Kunststoff ein Treibmittel mit hohem Druck zugeführt und die Menge des Treibmittels mit einem Stellventil (4) geregelt wird, und wobei der Druck hinter dem Stellventil mittels eines Druckhalteventils (5) konstant gehalten wird, **dadurch gekennzeichnet**, daß die Menge des Treibmittels direkt in Abhängigkeit von der geförderten Kunststoffmasse geregelt wird und daß der Differenzdruck zwischen Eingang und Ausgang des Stellventils (4) auf 10 bis 50 bar, vorzugsweise 10 bis 30 bar, konstant gehalten wird.

2. Verfahren nach Anspruch 1, dadurch gekennzeichnet, daß die Menge des durch das Stellventil (4) fließenden Treibmittels über die Extruderdrehzahl geregelt wird.

3. Verfahren nach einem der Ansprüche 1 oder 2, dadurch gekennzeichnet, daß als Treibmittel Stickstoff oder Kohlendioxid verwendet werden.

4. Verfahren nach Anspruch 3, dadurch gekennzeichnet, daß dem Stickstoff oder Kohlendioxid ein weiteres Treibmittel, vorzugsweise ein Kohlenwasserstoff oder halogenierter Kohlenwasserstoff, in einer Mischkammer zugegeben wird.

## Claims

1. Process for the production of extruded foamed plastics, a foaming agent being fed under high pressure to the plastic conveyed in the extruder and the amount of foaming agent being controlled by a servo-valve (4), and the pressure behind the servo-valve being kept constant by means of a pressure-maintaining valve (5), characterized in that the amount of foaming agent is controlled directly as a function of the conveyed polymer mass and in that the differential pressure between the inlet and outlet of the servo-valve (4) is kept constant to within 10 to 50 bar, preferably 10 to 30 bar.

2. Process according to Claim 1, characterized in that the amount of foaming agent flowing through the servo-valve (4) is controlled via the extruder speed.

3. Process according to one of Claims 1 or 2, characterized in that nitrogen or carbon dioxide is used as the foaming agent.

4. Process according to Claim 3, characterized in that a further foaming agent, preferably a hydrocarbon or halogenated hydrocarbon, is fed to the nitrogen or carbon dioxide in a mixing chamber.

## Revendications

1. Procédé pour la fabrication de matières plastiques alvéolaires extrudées, dans lequel un agent moussant est introduit sous haute pression dans la matière plastique refoulée dans l'extrudeuse et la quantité de l'agent moussant est régulée avec une vanne de régulation (4), et dans lequel la pression après la vanne de régulation est maintenue constante au moyen d'une vanne de maintien de la pression (5), caractérisé en ce que la quantité de l'agent moussant est régulée directement en fonction de la masse de matière plastique refoulée et en ce que la différence de pression entre l'entrée et la sortie de la vanne de régulation (4) est maintenue constante à 10 à 50 bar, de préférence 10 à 30 bar.

2. Procédé suivant la revendication 1, caractérisé en ce que la quantité de l'agent moussant circulant à travers la vanne de régulation (4) est régulée par la vitesse de rotation de l'extrudeuse.

3. Procédé suivant l'une des revendications 1 ou 2, caractérisé en ce que l'on utilise comme agent moussant de l'azote ou du dioxyde de carbone.

4. Procédé suivant la revendication 3, caractérisé en ce que l'on ajoute à l'azote ou au dioxyde de carbone, dans une chambre de mélange, un autre agent moussant, de préférence un hydrocarbure ou un hydrocarbure halogéne.
